# EUROPEAN PATENT SPECIFICATION

(11) **EP 1 874 502 B1**
(45) Date of publication and mention of the grant of the patent: **01.07.2009**
(21) Application number: 06727884.6
(22) Date of filing: 11.04.2006
(51) Int. Cl.: B23P 21/00, B62D 65/02

(54) **A METHOD AND APPARATUS FOR THE ASSEMBLY AND WELDING OF AUTOMOTIVE DOOR PANELS**
VERFAHREN UND VORRICHTUNG ZUR MONTAGE UND VERSCHWEISSUNG VON TÜRVERKLEIDUNGSELEMENTEN FÜR FAHRZEUGE
PROCEDE ET APPAREIL D'ASSEMBLAGE ET DE SOUDAGE DES PANNEAUX DE PORTE D'AUTOMOBILE

(30) Priority: 14.04.2005 IT TO20050247
(43) Date of publication of application: 09.01.2008
(73) Proprietor: Johnson Controls Automotive S.r.l., 10095 Grugliasco (TO) (IT)
(72) Inventor: INSERO, Claudio, I-04023 Formia (Latina) (IT); LAPADULLA, Donato, I-85028 Rionero In Vulture (Potenza) (IT); PAGANO, Claudio, I-84100 Salerno (IT); PALUMBO, Pasqualino, I-81053 Riardo (Caserta) (IT); TWEEDIE, Alastair, Ross, I-25035 Ospitaletto (Brescia) (IT)
(74) Representative: Quinterno, Giuseppe
(86) International application number: PCT/IB2006/051108
(87) International publication number: WO 2006/109246

(56) References cited:
- EP-A- 0 532 372
- US-A- 6 098 268
- US-A- 6 105 242
- US-A1- 2004 167 647
- US-B1- 6 457 231
- PATENT ABSTRACTS OF JAPAN vol. 1996, no. 08, 30 August 1996 (1996-08-30) -& JP 08 104264 A (SANYO MACH WORKS LTD), 23 April 1996 (1996-04-23)

## Description

The present invention refers to the systems for the assembly and welding of vehicle door panels.

In the automotive industry, door panels are fitted to the door frame for aesthetic, structural and safety reasons. The panels also act as a support for door handles, arm rests and pockets for objects. Their impact on the car interior design is important. Increasingly the panels are being designed in complex shapes comprising multiple components made of plastic or vegetable fibre materials which during the assembly process are welded together using ultrasonic or vibration generation methods.

Due to the shape of the panels and the necessity to ensure structural integrity the welding is a critical part of the assembly process. At present the prime components of the panels are assembled by hand into dedicated welding work stations equipped with multiple individual fixed axis welding sonotrodes with dedicated tips for the specific weld to be performed, mounted in groups, each work station dedicated to a single specific door panel design (for example, left, right, front, back, five door, three door, etc.). The only movement of the welding tips is that necessary to perform the specific weld to which each tip is assigned, according to a fixed sequence. The grouping of the sonotrodes makes it difficult if not impossible to optimise the individual welds from both qualitative and throughput points of view. Holding the panel components stationary and in position during welding often requires complex mechanisms. On the other hand, an accidental movement of the parts often results in poor welds and scraps.

The welding work stations are dedicated to the specific panel design for the entire life of the automobile model and for the production of the ensuing spare parts (for a total period approximately greater than 15 years). During such period the work stations are not usable for any new automobile models or major design changes of the present models without reinvestments equal to an important fraction of the cost of the original equipment and production difficulties and scraps during such process of conversion. Final finishing of the panels is carried out at separate assembly work stations with assembling workers, which involves further risks of defects due to excessive handling of the panels.

The costs involved in the conventional processes are therefore rather high, particularly at change of automobile model and increases in production volumes, while the restricted movement and group positioning of the welding heads place creates restrictions on the design of the panel, both structurally and aesthetically, factors which may have repercussions on the design and saleability of the automobile.

Examples of prior art systems are described in documents US 6 457 231 (the preamble of claim 3), EP 0 532 372 and US 6 098 268.

It is the object of the present invention to reduce the impact of the above mentioned costs and design restrictions in a process for assembling automotive door panels.

According to the invention, such object is achieved by a method for assembling and welding vehicle door panels having the features defined in claim 1, and by an apparatus assembling and welding vehicle door panels having the features defined in claim 3.

In fact, in a method and apparatus according to the invention the panel components are completely assembled and welded in a flexible modular manufacturing process which permits the welding of complex shapes in complex positions and which can be adapted in a relatively simple and economic way to design and/or production volume changes.

Preferred embodiments of the invention are defined in the dependent claims.

Further features and advantages of the invention will become apparent from the following detailed description, carried out in a purely explanatory not limitative manner, with reference to the appended drawings, in which:
- figure 1 is a view from the top of door panel components in their assembly condition, arranged in a carriage or platform, before welding;
- figure 2 is an exploded view of a detail of the components shown in fig. 1, indicated by arrow II of such figure;
- figure 3 is a schematic, side elevation view of an apparatus for the assembly and welding of door panels according to the invention;
- figure 4 is a schematic, perspective view of a welding machine of the apparatus of fig. 3;
- figures 5 are schematic, perspective views of welding heads for the machine of fig. 4;
- figure 6 is a schematic, perspective view of a part of the machine of fig. 4 provided with a fitting for allowing the welding heads to be automatedly changed during the process of welding the panels;
- figure 7 is a schematic, perspective view of a welding head provided with adjustable height and position piston for securing in position the panel components during the welding; and
- figure 8 is a schematic, perspective view of a welding head provided with a constant tension spring to ensure a sufficient pressure of the welding tool on the panel components.

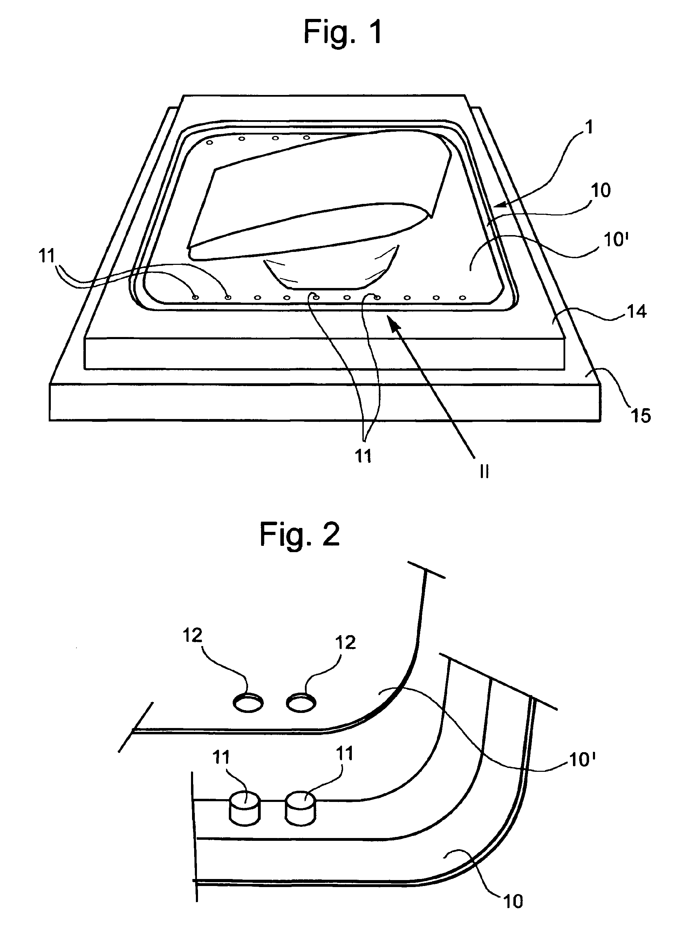

With reference to the drawings, a door panel to be assembled by means of the method and apparatus of the invention is designated by 1 in fig. 1. Such panels are normally of unique design for each automobile model, and are further divided between panels for front and back doors, and panels for right and left doors. Each panel 1 comprises a plurality of components 10, 10' (for simplicity, only two of which are shown in fig. 1 and 2), which generally consist of a shell or a subassembly of regular or irregular form, made of plastic and/or fiber material. In order to allow the assembly of the parts, one or more of the components 10 are provided with welding locations in the form of sticks 11 integrally formed with the respective component 10. Another component, designated by 10' and destined to be assembled with the first member 10, has corresponding holes 12. In this way the component 10 and the component 10' form, respectively, the male part and the female part in a particular joint within the plurality of components which form the panel 1.

Before the welding, the components 10, 10' are assembled in a carrier pallet or holder 14 which, in order to avoid scratching the components 10, 10' is precision machined from a plastic material. The low cost carrier pallet 14 constitutes the only part of the present invention which is specifically dedicated to a specific panel design. There is a carrier pallet for each panel design and the number of pallets 14 required for an assembly line (shown in fig. 2) is a function of the throughput volume required from the assembly line. The carrier pallet 14 is connected via bolts or other types of releasable connections to a carrier plate 15 which is of a standard design for all the carrier pallets 14, independently from the structure of the pallet 14 supported by it. The plate 15 and the pallet 14 together form a carriage or platform for transporting the assembled panel in the apparatus illustrated in fig. 2.

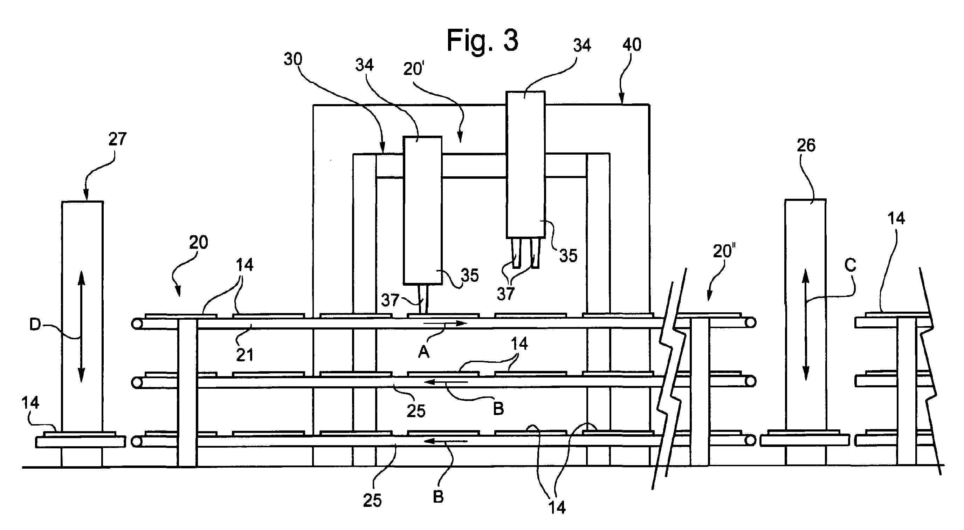

As illustrated in figure 3, an assembly and welding apparatus or line according to the invention comprises a plurality of work stations or modules 20, 20', 20" disposed in sequence, through which the carrier pallets 14 pass from one assembly or welding operation to another along a conveyor line 21.

The pallets 14 are disposed in any order or sequence (for example, a left door panel for a three door car first, then a right door panel for a five door car, and so on) for each model of motor vehicle to be produced. At a station 20 the components 10 are loaded into the pallets 14 and assembled as previously described with reference to figs. 1 and 2. This assembly may be manual or automated. The pallets 14 then move along the conveyor line 21, in the direction of flow of the line as indicated by arrow A, through further modular assembly stations (not shown) which may be added to the line for specific assembly operations that may be manual or automated.

At least one welding station 20' is arranged along the conveyor line 21, in which the panel 1 is ultrasonically welded in the predetermined welding locations, by riveting the sticks 11 of component 10 on component 10'. Such station 20' will be described in greater detail in the following.

At the end of the line 21, after removal of the completed and welded door panel at the station 20", the pallets 14 return to the start of the assembly line for reuse (according to the direction of arrows B). In order to allow the return of pallets 14 a multilayer conveyor system is arranged, which is provided with return lines 25 and is positioned under or over the assembly line 21, and a lift system 26, which allows the transfer of pallets 14 from the conveyor line 21 to the return lines 25 (according to the direction of arrow C). In order to repeat the process of the assembly line 21 the carrier pallets 15 are again brought up to the assembly line 21 via a second lift system 27 which transfers such pallets to the component loading station 20 (according to the direction of arrow D). The return lines 25 and lift systems 26 and 27 are controlled so as to arrange the pallets 14 at the station 20 in a predetermined sequence, thus generating a predetermined panel production sequence (for example, the right front door panel first, then the left front door panel, then the right back door panel, and finally the left back door panel). Such sequence for arranging the pallets 14 may alternatively be generated in a random way.

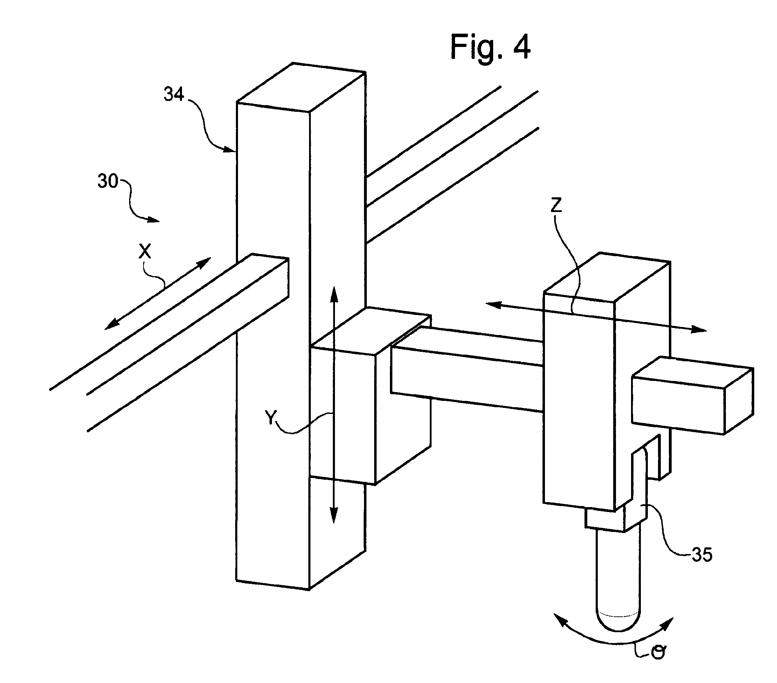

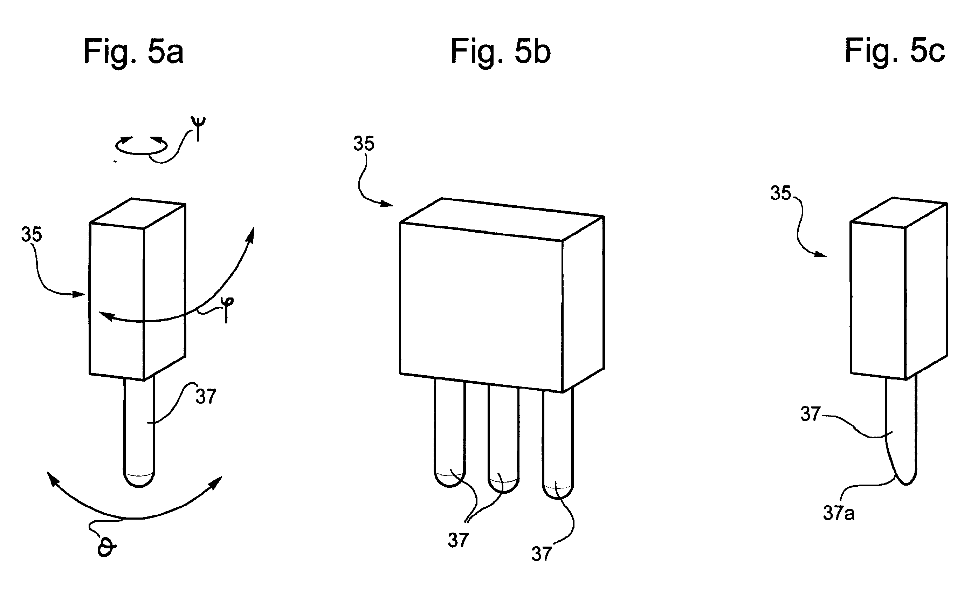

With reference to figs. 3 and 4, the welding station 20' comprises at least one robotic, modular welding machine 30. Such machine comprises one or more three axis robot 34 (as indicated by the arrows x, y, z), fitted with a welding head 35. As indicated in fig. 5a, at least one of the welding heads 35 is rotatable about at least one rotation axis, and preferably is multi axis, that is rotatable about more rotation axis, for example in the angular directions of the arrows ϕ, ψ, θ. As illustrated in fig. 5b, at least one of the welding heads 35 may carry a plurality of sonotrodes 37 for ultrasonic welding. As illustrated in fig. 5c, the tips 37a of the sonotrodes 37 may be individualized for specific weld positions.

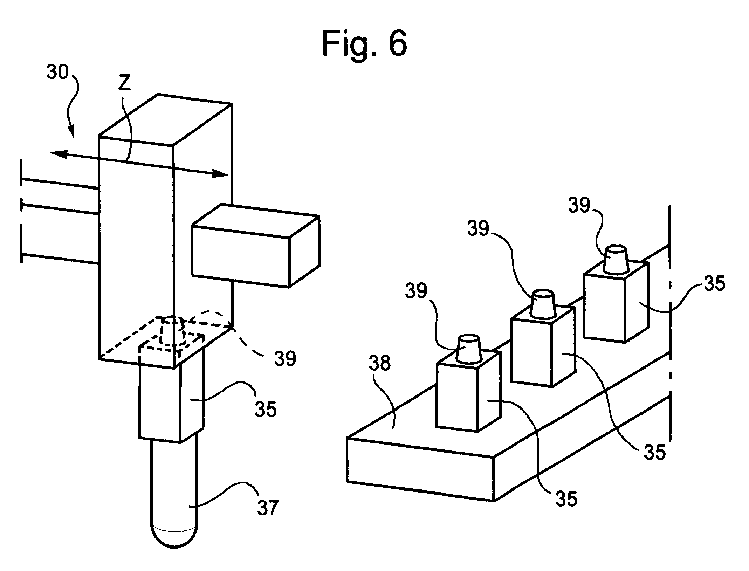

As illustrated in fig. 6, in order to ensure the flexibility of position and weld type in the individual welding station 20' a container or rack 38 can be provided, which is positioned in a predetermined way and from which the welding machine 30 with a tooling quick change fitting 39 may rapidly change the welding head 35 in the intervals between different welds of the panels. Alternatively or additionally, a container or rack can be provided for automated change of the sole sonotrodes (not shown).

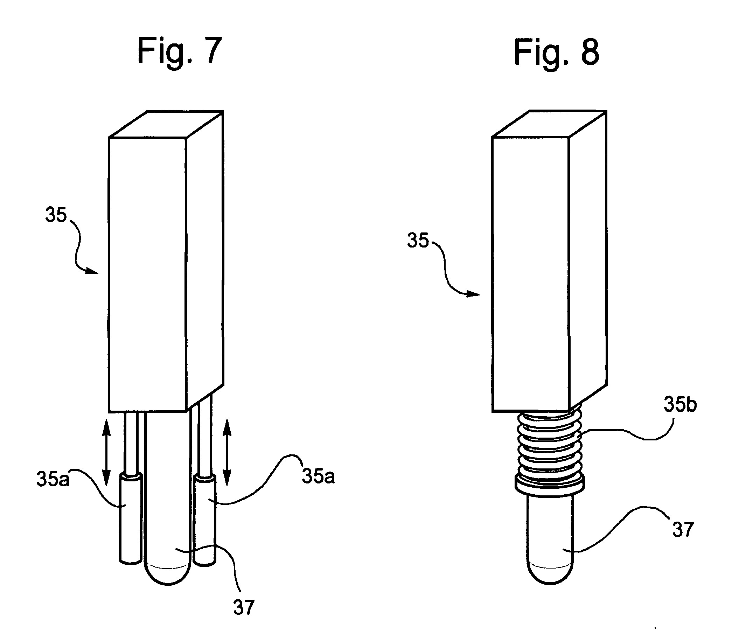

In order to maintain stability of components 10, 10' of panel 1 during welding pneumatically or hydraulically adjustable pistons indicated by 35a in fig. 7 are preferably fitted to the welding heads 35 for exerting a vertical thrust on the components 10, 10' during welding. In order to ensure a sufficient pressure of the welding tools 37 on uneven or variable surfaces, a constant compression spring indicated by 35b in fig. 8 is preferably fitted to the welding heads 35. Alternatively another type of device can be provided for ensuring constant pressure of the sonotrode on the components irrespective of their wall thickness.

Assembly line control and panel sequence management are via a computerized controller 40. The ultrasonic welding generators and wave control are as well contained in the controller 40, which also manages movement of the welding machines 34. Due to the spatial flexibility of the robotic welders the controller 40 permits simple and rapid reprogramming of the weld point positions for each individual door panel in the case of design modification. In particular, each welding head may be individually programmed for specific welds. A high level of welding optimization can thereby be obtained.

As can be appreciated, the method and apparatus of the present invention provides for efficient, flexible and optimal assembly and welding in any assembly sequence of automotive door panels and their components.

Obviously, without prejudice to the principle of the invention, the realization details and embodiments may be widely modified with respect to what has been described and shown without departing from the scope of the invention as defined by the appended claims.

## Claims

1. A method for assembling and welding vehicle door panels, including the following steps:
- at an initial assembly station (20) components (10, 10') of said panels are assembled and arranged on a plurality of plates or carriages (14, 15) for carrying said panels, which are profiled in a way adaptable to the shape of the panels,
- said plates or carriages with the components of the panels are automatedly transported to a station (20') for welding the components,
- at said welding station at least one welding head (35), which is movable with a plurality of degrees of freedom, is automatedly positioned and orientated, and if necessary, the configuration of said welding head is automatedly changed, according to a welding sequence which depends from the design specifications of the panels,
- said plates or carriages with the assembled and welded panels are automatedly transported to a removal station (20")
- at said removal station, the assembled and welded panels are removed, and
- the unloaded plates or carriages are automatedly returned from said removal station to said initial station,
those of said steps which are automatedly performed being coordinated in adaptable and programmable fashion according to a processing sequence which depends from the design specifications of said panels.

2. A method according to claim 1, wherein said step of automatedly returning the unloaded plates or carriages is performed by arranging said plates or carriages in a randomly generated sequence.

3. An apparatus for assembling and welding vehicle door panels, including
- a plurality of work stations (20, 20', 20"), comprising an initial station (20) for assembling components of said panels, at least one station (20') for welding said components which comprises at least one reconfigurable welding head (35) movable with a plurality of degrees of freedom, changing means (34, 38) being provided for automatedly changing the configuration of said reconfigurable welding head, and at least one station (20") for removing the assembled and welded panels,
- transfer means (21, 25) for transporting said panels from a work station to another, said transfer means being provided with a plurality of plates or carriages (14, 15) for carrying said panels which are profiled in a way adaptable to the shape of said panels, **characterised by** further comprising return means (25, 26, 27) for returning the unloaded plates or carriages from said removal station to said initial station, and
- control means (40) which are programmed for adaptably coordinating said transfer means, welding heads and changing means according to a processing sequence which depends from the design specifications of said panels.

4. An apparatus according to claim 3, wherein said work stations are modular and interchangeable.

5. An apparatus according to claim 3 or 4, wherein said transfer means comprise a conveyor line (21), and said plates or carriages comprise a base part (15) which is movable on said conveyor line, and an interchangeable part (14) which is releasably fixed to said base part and is profiled for supporting a predetermined type of panel.

6. An apparatus according to claim 5, wherein said return means comprise a plurality of return lines (25) which are vertically positioned with respect to the conveyor line (21), and first and second lift systems (26, 27) which are disposed at respective opposite ends of the transport line (21).

7. An apparatus according to any of claims 3 to 6, wherein said control means are programmed for operating said return means in such a way to arrange said plates or carriages in a randomly generated sequence and for operating in a corresponding way said conveyor line, welding heads and changing means.

8. An apparatus according to any of claims 3 to 7, wherein said at least one welding head is provided with means (35a) for maintaining stability of the components (10, 10') of the panels (1) during welding.

9. An apparatus according to claim 8, wherein said stability maintaining means comprise pneumatically or hydraulically adjustable pistons.

10. An apparatus according to any of claims 3 to 9, wherein said at least one welding head is provided with means (35b) for pressing the welding head against said panels.

11. An apparatus according to claim 10, wherein said pressing means comprise a constant compression elastic device.

## Patentansprüche

1. Verfahren zur Montage und zum Verschweißen von Fahrzeugtürblechen, welches die folgenden Schritte umfasst:
- in einer Anfangsmontagestation (20) werden Komponenten (10, 10') der Bleche montiert und auf mehreren Platten oder Wagen (14, 15) angeordnet, um die Bleche zu tragen, welche in einer Weise profiliert sind, die an die Form der Bleche anpassbar ist,
- die Platten oder Wagen mit den Komponenten der Bleche werden automatisch zu einer Station (20') zum Verschweißen der Komponenten transportiert,
- in der Schweißstation wird zumindest ein Schweißkopf (35), der mit mehreren Freiheitsgraden bewegbar ist, automatisch positioniert und orientiert, und, wenn notwendig, wird die Konfiguration des Schweißkopfes gemäß einer Schweißsequenz, welche von Design-Spezifikationen der Bleche abhängt, automatisch geändert,
- die Platten oder Wagen mit den montierten und verschweißten Blechen werden automatisch zu einer Entnahmestation (20") transportiert,
- in der Entnahmestation werden die montierten und verschweißten Bleche entnommen, und
- die entladenen Platten oder Wagen werden automatisch von der genannten Entnahmestation zur Anfangsstation zurückgebracht,
wobei die Schritte, welche automatisch durchgeführt werden, in adaptierbarer und programmierbarer Weise gemäß einer Bearbeitungssequenz koordiniert werden, welche von den Design-Spezifikationen der Bleche abhängt.

2. Verfahren nach Anspruch 1, wobei der Schritt zum automatischen Zurückbringen der entladenen Platten oder Wagen durchgeführt wird, indem die Platten oder Wagen in einer willkürlich erzeugten Sequenz angeordnet werden.

3. Vorrichtung zum Montieren und Verschweißen von Fahrzeugtürblechen, welche umfasst:
- mehrere Arbeitsstationen (20, 20', 20"), welche eine Anfangsstation (20) umfassen, um Komponenten der Bleche zu montieren, zumindest eine Station (20'), um die Komponenten zu verschweißen, welche zumindest einen rekonfigurierbaren Schweißkopf (35) umfasst, der mit mehreren Freiheitsgraden bewegbar ist, wobei eine Änderungseinrichtung (34, 38) zum automatischen Ändern der Konfiguration des rekonfigurierbaren Schweißkopf vorgesehen ist, und zumindest eine Station (20"), um die montierten und verschweißten Bleche zu entnehmen,
- eine Transporteinrichtung (21, 25) zum Transportieren der Bleche von einer Arbeitsstation zu einer anderen, wobei die Transporteinrichtung mit mehreren Platten oder Wagen (14, 15) versehen ist, um die Bleche zu tragen, welche in einer Weise profiliert sind, welche an die Form der Bleche anpassbar ist, **dadurch gekennzeichnet, dass** sie außerdem eine Zurückbringeinrichtung (25, 26, 27) umfasst, um die entladenen Platten oder Wagen von der Entnahmestation zur Anfangsstation zurückzubringen, und
- eine Steuereinrichtung (40), die programmiert ist, um adaptiv die Transporteinrichtung, Schweißköpfe und die Änderungseinrichtung gemäß der Bearbeitungssequenz, welche von den Design-Spezifikationen der Bleche abhängt, zu koordinieren.

4. Vorrichtung nach Anspruch 3, wobei die Arbeitsstationen modular und untereinander austauschbar sind.

5. Vorrichtung nach Anspruch 3 oder 4, wobei die Transporteinrichtung eine Förderstrecke (21) umfasst, und die Platten oder Wagen ein Basisteil (15) umfassen, welches auf der Förderstrecke bewegbar ist, und ein untereinander austauschbares Teil (14), welches lösbar am Basisteil fixiert ist und profiliert ist, um eine vorher festgelegte Blechart zu tragen.

6. Vorrichtung nach Anspruch 5, wobei die Zurückbringeinrichtung mehrere Zurückbringstrecken (25) umfasst, welche vertikal in Bezug auf die Förderstrecke (21) posizioniert sind, und erste und zweite Hebesysteme (26, 27), welche an entsprechenden ab gewandten Enden der Transportstrecke (21) angeordnet sind.

7. Vorrichtung nach einem der Ansprüche 3 bis 6, wobei die Steuereinrichtung programmiert ist, um die Zurückbringeinrichtung in einer Weise zu betätigen, um die Platten oder Wagen in einer zufallsmäßig erzeugten Sequenz anzuordnen und um in einer entsprechenden Weise die Förderstrecke, die Schweißköpfe und die Änderungseinrichtung zu betätigen.

8. Vorrichtung nach einem der Ansprüche 3 bis 7, wobei der zumindest eine Schweißkopf mit einer Einrichtung (35a) vorgesehen ist, um Stabilität der Komponenten (10, 10') der Bleche (1) während des Schweißens einzuhalten.

9. Vorrichtung nach Anspruch 8, wobei die Stabilitätsbeibehaltungseinrichtung pneumatisch oder hydraulisch einstellbare Kolben umfasst.

10. Vorrichtung nach einem der Ansprüche 3 bis 9, wobei der zumindest eine Schweißkopf mit einer Einrichtung (35b) versehen ist, um den Schweißkopf gegen die Bleche zu drücken.

11. Vorrichtung nach Anspruch 10, wobei die Drückeinrichtung eine Konstantdruck-Federeinrichtung umfasst.

## Revendications

1. Procédé pour assembler et souder des panneaux de portes de véhicules, comprenant les étapes suivantes :
- à une station d'assemblage initial (20), des composants (10, 10') desdits panneaux sont assemblés et disposés sur une pluralité de plateaux ou chariots (14, 15) destinés à transporter lesdits panneaux, qui sont profilés d'une façon adaptable à la forme des panneaux,
- lesdits plateaux ou chariots avec les composants des panneaux sont transportés de manière automatisée à une station (20') destinée à souder les composants,
- à ladite station de soudage, au moins une tête de soudage (35), qui peut être déplacée avec une pluralité de degrés de liberté, est positionnée et orientée de manière automatisée et, si nécessaire, la configuration de ladite tête de soudage est changée de manière automatisée, suivant une séquence de soudage qui dépend des spécifications de conformation des panneaux,
- lesdits plateaux ou chariots avec les panneaux assemblés et soudés sont transportés de manière automatisée à une station d'enlèvement (20"),
- à ladite station d'enlèvement, les panneaux assemblés et soudés sont enlevés, et
- les plateaux ou chariots déchargés sont renvoyés de manière automatisée de ladite station d'enlèvement à ladite station initiale,
celles desdites étapes qui sont exécutées de manière automatisée étant coordonnées d'une façon adaptable et programmable suivant une séquence de traitement qui dépend des spécifications de conformation desdits panneaux.

2. Procédé selon la revendication 1, dans lequel ladite étape de renvoi automatisé des plateaux ou chariots déchargés est exécutée en disposant lesdits plateaux ou chariots dans une séquence générée de façon aléatoire.

3. Appareil pour assembler et souder des panneaux de portes de véhicules, comprenant
- une pluralité de stations de travail (20, 20', 20"), comprenant une station initiale (20) destinée à assembler des composants desdits panneaux, au moins une station (20') destinée à souder lesdits composants qui comprend au moins une tête de soudage (35) reconfigurable qui peut être déplacée avec une pluralité de degrés de liberté, des moyens de changement (34, 38) étant prévus pour changer de manière automatisée la configuration de ladite tête de soudage reconfigurable, et au moins une station (20") destinée à enlever les panneaux assemblés et soudés,
- des moyens de transfert (21, 25) destinés à transporter lesdits panneaux d'une station de travail à une autre, lesdits moyens de transfert étant équipés d'une pluralité de plateaux ou chariots (14, 15) destinés à transporter lesdits panneaux, qui sont profilés d'une façon adaptable à la forme desdits panneaux, **caractérisée en ce qu'**elle comprend en outre des moyens de renvoi (25, 26, 27) destinés à renvoyer les plateaux ou chariots déchargés de ladite station d'enlèvement à ladite station initiale, et
- des moyens de commande (40) qui sont programmées pour coordonner de façon adaptable lesdits moyens de transfert, lesdites têtes de soudage et lesdites moyens de changement suivant une séquence de traitement qui dépend des spécifications de conformation desdits panneaux.

4. Appareil selon la revendication 3, dans laquelle lesdites stations de travail sont modulaires et interchangeables.

5. Appareil selon la revendication 3 ou 4, dans laquelle lesdits moyens de transfert comprennent une ligne de convoyeur (21), et lesdits plateaux ou chariots comprennent une partie de base (15) qui peut se déplacer sur ladite ligne de convoyeur, et une partie interchangeable (14) qui est fixée de façon démontable à ladite partie de base et est profilée pour supporter un type de panneau prédéterminé.

6. Appareil selon la revendication 5, dans laquelle lesdits moyens de renvoi comprennent une pluralité de lignes de renvoi (25) qui sont positionnées verticalement par rapport à la ligne de convoyeur (21), et des premier et second systèmes élévateurs (26, 27) qui sont disposés à des extrémités respectives opposées de la ligne de transport (21).

7. Appareil selon l'une quelconque des revendications 3 à 6, dans laquelle lesdits moyens de commande sont programmés pour mettre lesdits moyens de renvoi en action de façon appropriée pour disposer lesdits plateaux ou chariots en une séquence générée de façon aléatoire et pour mettre en action d'une façon correspondante ladite ligne de convoyeur, lesdites têtes de soudage et lesdits moyens de changement.

8. Appareil selon l'une quelconque des revendications 3 à 7, dans laquelle ladite au moins une tête de soudage est équipée de moyens (35a) destinés à maintenir la stabilité des composants (10, 10') des panneaux (1) pendant le soudage.

9. Appareil selon la revendication 8, dans laquelle lesdits moyens de maintien de la stabilité comprennent des pistons réglables par voie pneumatique ou hydraulique.

10. Appareil selon l'une quelconque des revendications 3 à 9, dans laquelle ladite au moins une tête de soudage est équipée de moyens (35b) destinés à presser la tête de soudage contre lesdits panneaux.

11. Appareil selon la revendication 10, dans laquelle lesdits moyens de pression comprennent un dispositif élastique à compression constante.
